# FASCICULE DE BREVET EUROPEEN

(11) **EP 0 782 243 B1**
(45) Date de publication et mention de la délivrance du brevet: **08.03.2000**
(21) Numéro de dépôt: 96402887.2
(22) Date de dépôt: 24.12.1996
(51) Int. Cl.: H02M 3/07

(54) **Générateur de créneaux de haute tension**
Hochspannungsimpulsgenerator
High-voltage pulse generator

(30) Priorité: 26.12.1995 FR 9515501
(43) Date de publication de la demande: 02.07.1997
(73) Titulaire: STMicroelectronics S.A., 94250 Gentilly (FR)
(72) Inventeur: Tailliet, Francois, 94230 Cachan (FR)
(74) Mandataire: Schmit, Christian Norbert Marie

(56) Documents cités:
- EP-A- 0 591 022
- US-A- 3 824 447
- US-A- 4 398 099

## Description

L'invention concerne un dispositif de génération de créneaux de tension d'amplitude supérieure à la tension d'alimentation. Elle s'applique en particulier aux dispositifs à pompe de charge à condensateurs et transistors de commutation pour délivrer en sortie une haute tension régulée capable d'alimenter des charges importantes en sortie, notamment des lignes de bit capacitives de mémoires.

On connaît bien les dispositifs de génération de tension à pompe de charge. Ils sont notamment utilisés dans des circuits intégrés pour fournir la haute tension nécessaire à l'écriture des cellules d'une mémoire non volatile (15 à 20 volts). Ils sont en particulier très utilisés dans les circuits intégrés destinés aux applications de type carte à puces.

Un des problèmes liés à ce type d'applications, est de pouvoir fournir une haute tension régulée qui puisse alimenter les lignes de bit capacitives des mémoires, sans s'écrouler. Il faut donc que ces dispositifs à pompe de charge aient une sortance suffisante.

Par ailleurs, l'évolution technologique permet d'utiliser des tensions d'alimentation de plus en plus basses, entre deux volts et cinq volts. A ces niveaux de tension, des paramètres qui étaient jusque là négligeables deviennent particulièrement gênants. Notamment, les tensions de seuil des éléments actifs ne sont plus négligeables. Or les pompes de charge classiques de type Schenkel utilisent des diodes. Ces diodes (qui sont en général des transistors montés en diode) font perdre une tension de seuil sur la tension commutée sur les condensateurs. Ainsi, au lieu d'obtenir en sortie une tension égale à (n+1).Vdd, où n est le nombre d'étages de la pompe, on ne récupère en première approximation que (n+1).(Vdd-Vt).

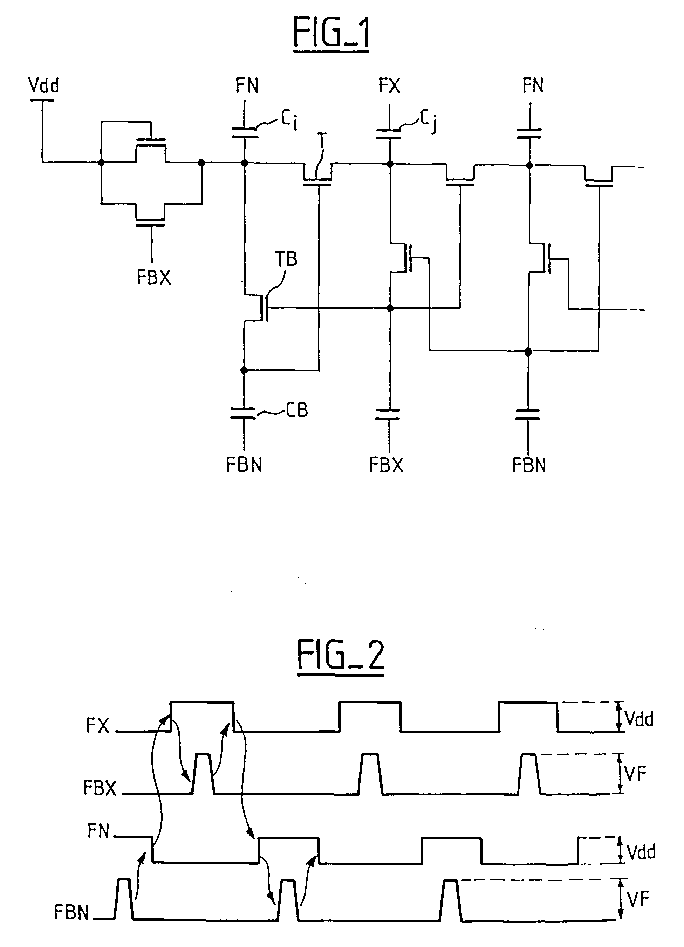

C'est pourquoi, une structure particulière de pompe a été proposée, qui permet de transmettre totalement la tension d'alimentation sur le condensateur. Une telle structure est en particulier décrite dans la demande européenne EP-A-0 591 022 de la Demanderesse. Elle comprend un jeu de condensateurs et de transistors de commutation. Pour ne plus avoir de perte due à la tension de seuil des transistors, on commande la grille des transistors de commutation par un signal à créneaux de tension d'amplitude supérieure d'au moins une tension de seuil augmentée de l'effet substrat ("body effect") à la tension de drain à commuter, pour le rendre bien passant. Comme par ailleurs, la tension à commuter est plus ou moins élevée, selon la position du transistor dans la pompe (plus on approche de la sortie, plus la tension à commuter est élevée), la tension de grille à appliquer est aussi différente selon cette position : il ne faut pas que la tension de grille soit trop élevée (risque de claquage) mais elle doit l'être suffisamment pour que le transistor soit passant. Pour cela on utilise simplement un dispositif élévateur de tension, c'est à dire un bootstrap. Ce dispositif comprend (Figure 1) pour chaque transistor de commutation T connecté entre deux condensateurs Ci, Cj du réseau, un transistor TB commandé par une première phase secondaire pour court-circuiter la grille et le drain du transistor T et un condensateur de bootstrap CB relié à l'autre phase secondaire. Ainsi, la tension de grille préalablement préchargée à la tension de drain (FBX=1) est surélevée d'un ΔV par le condensateur (FBN=1) (ΔV ≈ amplitude de FBN) ce qui rend le transistor très passant, en sorte qu'il commute la tension de drain sur sa source sans pertes significatives.

Cette structure de l'état de la technique nécessite les deux phases habituelles complémentaires FN, FX, non recouvrantes, commutant entre 0 et Vdd et deux phases secondaires correspondantes FBN et FBX, sensiblement en synchronisme avec les phases principales, chacune commutant entre 0 et une tension VF à l'intérieur des créneaux de la phase principale FN, FX associée. La tension VF doit être supérieure à la tension de seuil du transistor de sortie de la pompe, augmentée de l'effet substrat. Elle doit être inférieure à une tension limite, pour ne pas avoir de claquage d'oxyde de grille. En pratique, si le transistor de sortie de la pompe est un transistor N natif (tension de seuil de 0,5 volts environ) avec 20 volts sur son drain, la tension VF pourra prendre une valeur comprise entre 4 volts à Vdd=1 volt et 10 volts à Vdd=5 volts. Une telle structure et l'allure des phases de commande correspondantes sont détaillées en figures 1 et 2 des dessins annexés.

Un problème pour réaliser cette structure concerne la production des phases secondaires FBN et FBX. Il est en effet souhaitable d'avoir une pompe de charge qui fonctionne avec une fréquence la plus stable possible, notamment indépendante des variations de la tension d'alimentation, et la plus élevée possible, pour assurer la meilleure sortance à la pompe de charge. Ceci est accentué avec l'utilisation d'une faible tension d'alimentation, parce que la pompe doit alors comporter encore plus d'étages pour pouvoir atteindre le niveau de haute tension souhaité. On sait en effet que la sortance d'une pompe de charge est inversement proportionnelle au nombre d'étages qu'elle comporte et qu'elle est proportionnelle à la fréquence de commutation. Ainsi, plus le nombre d'étages est important, plus la fréquence de commutation doit être élevée, pour avoir une bonne sortance.

Or, dans l'état de la technique, ces phases secondaires d'amplitude plus élevée que la tension d'alimentation Vdd, sont obtenues par des élévateurs de tension à condensateur et circuit à retard, c'est à dire par plusieurs "bootstraps" mis en série. Ceci implique un temps de réaction très lent pour fournir les créneaux de tension, égal au nombre de bootstraps nécessaires pour atteindre l'amplitude recherchée, multiplié par le temps de réaction d'un bootstrap. On est donc très limité en fréquence, ce qui limite le nombre d'étages possible dans la pompe. On ne peut donc pas descendre à des tensions d'alimentation très basses avec un tel dispositif. Par ailleurs, chaque bootstrap successif consomme une partie de l'énergie fournie par le bootstrap précédent pour pouvoir élever le niveau de tension. Il faut donc utiliser de gros condensateurs, ce qui occupe beaucoup d'espace et produit du bruit. Enfin, il faut aussi pouvoir réguler la tension produite pour ne pas claquer les oxydes de grille des transistors de commutation bootstrapés de la pompe de charge auxquels l'amplitude des phases secondaires est appliquée via un condensateur.

L'invention a pour objet de résoudre ces différents inconvénients. Une solution à ces différents problèmes techniques a été trouvée dans la présente invention, dans une structure à réseau de condensateurs et transistors de commutation, à deux phases de fonctionnement, une première pour isoler tous les condensateurs et les charger au niveau de la tension d'alimentation tous simultanément, et une deuxième phase pour connecter tous ces condensateurs en série entre la tension d'alimentation et un noeud de sortie du réseau pour faire monter instantanément ce noeud de sortie à un niveau de tension supérieur au niveau de tension Vdd. Les condensateurs sont connectés tous en série par des transistors placés entre eux et commandés par un signal à créneaux de tension supérieure à la tension à commuter sur le noeud de sortie du réseau.

Avantageusement, ce signal est généré à partir d'une tension régulée, pour avoir sur le noeud de sortie du réseau un signal d'amplitude régulée.

Le générateur de créneaux d'amplitude supérieure à la tension d'alimentation selon l'invention peut travailler à une fréquence de commutation élevée et alimenter des charges capacitives. Avantageusement, le générateur selon l'invention peut fournir un signal à créneaux d'amplitude bien régulée, ne dépassant pas une tension limite déterminée.

Le générateur de créneaux selon l'invention est ainsi particulièrement adapté pour fournir les phases secondaires nécessaires à une pompe du type à transistors bootstrapés.

Telle que revendiquée, l'invention a pour objet un dispositif de génération de créneaux de tension d'amplitude supérieure à la tension d'alimentation, comprenant un réseau de condensateurs avec un circuit de commande à transistors de commutation à deux phases de fonctionnement, une première commandée par un premier signal de commutation pour isoler tous les condensateurs et les charger au niveau de la tension d'alimentation tous simultanément, et une deuxième phase commandée par un deuxième signal de commutation pour connecter tous ces condensateurs en série entre la tension d'alimentation Vdd et un noeud de sortie du réseau pour faire monter instantanément ce noeud de sortie à un niveau de tension supérieur au niveau de tension Vdd.

Selon l'invention, le dispositif de génération comprend en outre un circuit à translateurs de niveau alimenté par un générateur de tension régulée, pour fournir les deux signaux de commutation en opposition de phase, le premier signal de commutation commutant entre 0 volt et un niveau de l'ordre de la tension d'alimentation et le deuxième signal de commutation commutant entre 0 volt et un niveau supérieur à la tension à commuter sur le noeud de sortie du réseau.

D'autres caractéristiques et avantages de l'invention sont détaillés dans la description suivante faite à titre indicatif et non limitatif de l'invention pour une application à un générateur de haute tension régulée, en référence aux dessins annexés dans lesquels :
- la figure 1 représente schématiquement une pompe de charge à transistors bootstrapés,
- la figure 2 montre les formes des phases principales et secondaires pour commander une telle pompe de charge,
- la figure 3 représente un bloc diagramme général d'un générateur de haute tension régulée utilisant une pompe de charge de ce type,
- la figure 4 représente un schéma bloc détaillé d'un dispositif pour fournir les phases principales et secondaires dans ce générateur de haute tension selon l'invention,
- la figure 5 détaille une pompe de charge classique de type Schenkel comme utilisée dans le dispositif de génération des phases secondaires illustré à la figure 4,
- la figure 6 détaille le schéma électrique d'un translateur de niveau utilisé dans le dispositif de génération des phases secondaires illustré à la figure 4,
- la figure 7 est un dispositif de génération de créneaux de haute tension selon l'invention utilisé dans le dispositif de génération des phases secondaires illustré à la figure 4,
- les figures 8a à 8e illustrent la forme des signaux obtenus avec un dispositif de génération des phases secondaires illustré à la figure 4.

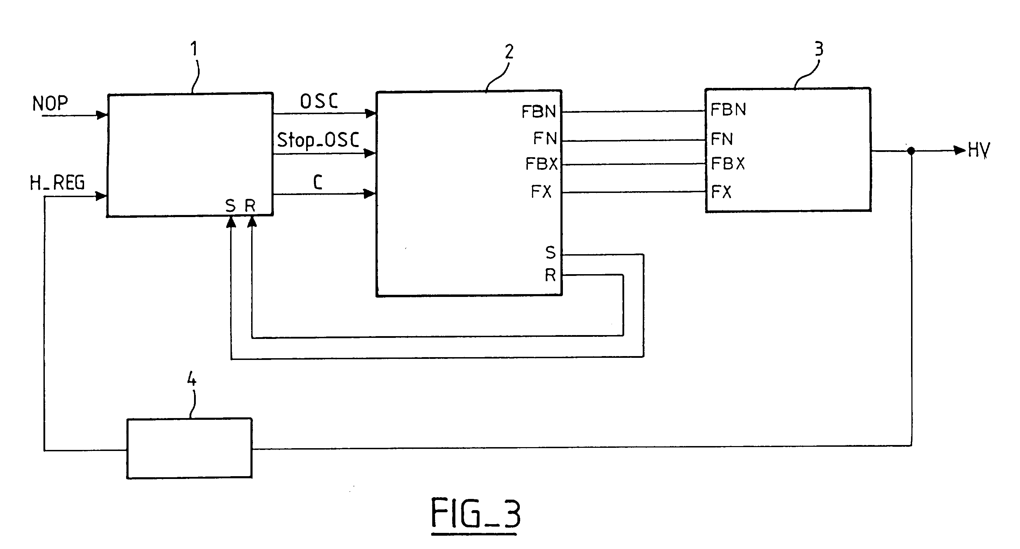

Un générateur de haute tension régulée HV est représenté sur la figure 3. Il comprend typiquement un circuit 1 pour produire un signal d'horloge qui va permettre à un circuit 2 de générer les phases principales FN, FX et secondaires FBN et FBX nécessaires pour commander une pompe de charge 3 à transistors bootstrapés (cf figure 1).

Le circuit 1 pourrait utiliser un signal d'horloge externe. Dans l'exemple représenté, on a plutôt choisi un oscillateur en anneau asservi en fréquence tel que décrit dans la demande FR-27 35 920 de la Demanderesse, qui fournit une fréquence optimum selon les variations de la tension d'alimentation Vdd. De manière simplifiée, cet oscillateur comprend un générateur d'impulsions C appliquées en entrée d'un diviseur pour obtenir en sortie un signal d'horloge OSC de rapport cyclique 1/2. Le générateur d'impulsions comprend classiquement un circuit oscillant de type RC série, et un comparateur à hystérésis. La fréquence de l'oscillateur est régulée par un circuit classique de régulation 4. Ce circuit de régulation 4 reçoit en entrée la haute tension HV produite par la pompe 3 et fournit en sortie un signal de régulation H-REG pour arrêter ou redémarrer l'oscillateur, selon que la haute tension est à la valeur désirée ou non. Le régulateur permet de rendre la haute tension HV produite par la pompe 3 indépendante des variations de la tension d'alimentation. Un signal NOP est également appliqué en entrée de l'oscillateur, qui correspond à un signal de mise en veille du générateur de haute tension. Ce signal permet d'activer le générateur seulement quand on en a besoin. Par exemple, dans un circuit mémoire, le générateur ne sera activé que pour exécuter une opération de programmation. Ces deux signaux sont combinés pour produire un signal de marche/arrêt de la pompe noté STOP_OSC sur la figure, qui est notamment appliqué au générateur d'impulsions et au diviseur. Dans l'exemple, l'oscillateur 1 reçoit aussi deux signaux R et S, produits par le circuit 2 de génération des phases. Ces deux signaux permettent de ralentir ou d'accélérer l'oscillateur pour tenir compte des variations de la tension d'alimentation Vdd. On se reportera éventuellement à la demande FR-27 35 920 précitée pour plus de détails.

Les trois signaux OSC, STOP_OSC et C sont appliqués en entrée d'un circuit 2 de génération de phases. Dans l'exemple, il s'agit des phases principales notées FN et FX et des phases secondaires notées FBN et FBX, pour commander la pompe de charge 3, comme montré en figures 1 et 2. Dans l'exemple, ce circuit 2 comprend en outre un dispositif d'asservissement de la fréquence du signal d'horloge OSC aux signaux de phases FBN, FN, FBX, FX. Ce dispositif d'asservissement délivre les signaux R et S appliqués en entrée de l'oscillateur 1.

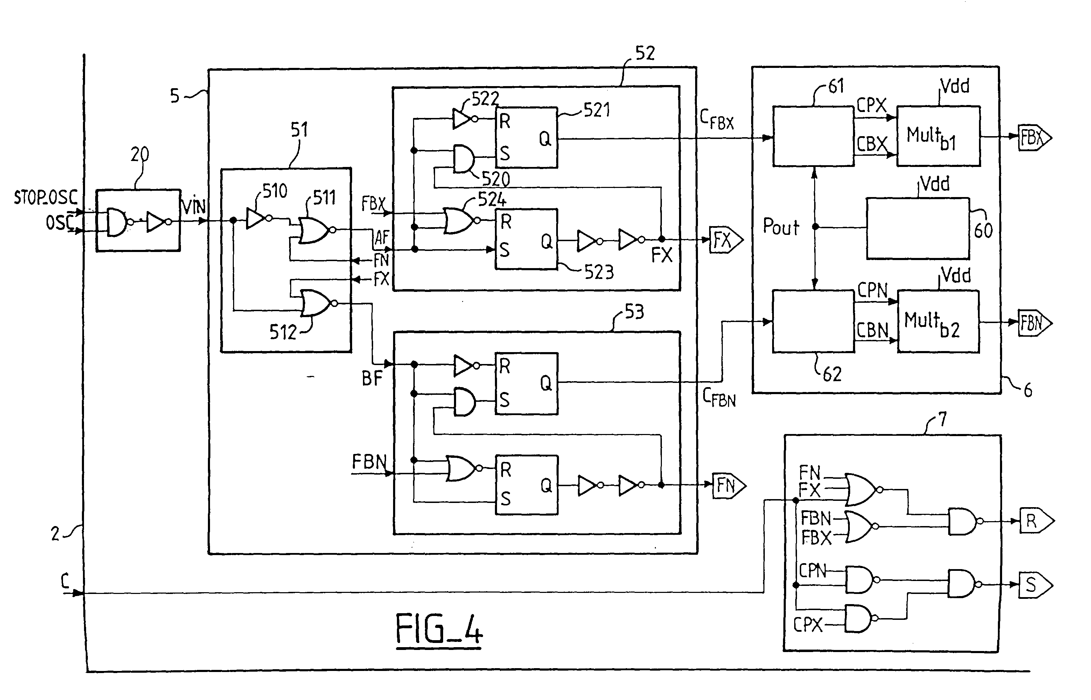

Le circuit 2 est détaillé à la figure 4. Les deux signaux STOP_OSC et OSC sont tout d'abord appliqués à un circuit 20 de portes logiques (porte NON_ET et inverseur) pour transmettre un signal d'horloge de base VIN, qui suit le signal d'horloge OSC dès que le générateur est activé (STOP_OSC=1).

On a vu que les phases principales FN et FX sont complémentaires et non recouvrantes et que les phases secondaires correspondantes FBN et FBX commutent respectivement à l'intérieur des créneaux de leur phase principale associée, comme représenté sur la figure 2. Les commandes de commutation pour produire ces différentes phases dépendent donc de l'état de ces différentes phases. On a donc une circuiterie assez complexe. Dans l'exemple de réalisation illustré cette circuiterie est découpée en plusieurs circuits :
- un circuit 5 de génération de phases principales FX et FN qui reçoit en entrées le signal d'horloge de base VIN et les phases secondaires FBX et FBN. Il produit en sortie les phases principales FX et FN et les commandes de commutation pour les phases secondaires, notées C_{FBX} et C_{FBN};
- un circuit 6 de génération des phases secondaires à créneaux de haute tension et
- dans l'exemple, un circuit 7 d'asservissement de la fréquence de l'oscillateur 1 aux différents signaux de phases et commandes de commutation.

Le circuit 7 d'asservissement ne sera pas détaillé. On indiquera simplement qu'il comprend des portes logiques pour produire des signaux R et S vers l'oscillateur pour le ralentir ou l'accélérer, selon l'amplitude et la séquence des différents signaux produits par le circuit de génération des phases secondaires. De cette manière on travaille toujours à une fréquence optimale pour la pompe, pour suivre les variations de la tension d'alimentation.

Le circuit de génération 5 des phases principales comprend un premier circuit 51 pour fournir la commande de commutation zéro ↗ Vdd pour chacune des phases principales FN et FX. Ainsi la commande de commutation AF pour la phase FX est générée quand le signal d'horloge VIN a commuté à l'état haut et si la phase FN est à l'état bas. La commande BF est générée de manière similaire pour la phase FN, quand le signal d'horloge a commuté à l'état bas et si la phase FX est à l'état bas.

Le circuit logique 51 comprend simplement un inverseur 510 pour appliquer le signal inversé /VIN, à une porte NON_OU 511 qui reçoit aussi le signal FN. Cette porte 511 délivre le signal AF. Enfin une autre porte NON_OU 512 reçoit les signaux VIN et FX pour délivrer le signal BF.

Ces commandes de commutation AF et BF sont respectivement appliquées à un circuit 52 et un circuit 53. Ces deux circuits sont similaires et seul le circuit 52 va être expliqué.

Le circuit 52 doit générer la phase FX et la commande de commutation C_{FBX} pour la phase secondaire FBX (voir Figure 2).

Le circuit 52 comprend pour cela une porte ET 520 qui reçoit en entrée les signaux AF et FX. La sortie de la porte 520 est appliquée comme entrée S d'une première bascule 521. Un inverseur 522 applique le signal inversé /AF en entrée R de la bascule qui délivre sur sa sortie Q, la commande de commutation C_{FBX}. Ainsi, (si on note 0 et 1 l'état logique des signaux correspondant à leur niveau de tension zéro volt ou Vdd) le signal C_{FBX} est mis à 1 quand AF et FX sont tous les deux à 1 et forcé à zéro par AF à zéro.

Le circuit 52 comprend une deuxième bascule 523 qui reçoit comme entrée S, le signal AF. Une porte NON_OU 524 reçoit en entrée les signaux AF et FBX. La sortie de la porte 524 est appliquée en entrée R de la bascule 523. La sortie Q est suivie dans l'exemple de deux inverseurs pour délivrer en sortie le signal FX. Ainsi FX est mis à 1 par le signal AF. Il ne repasse à zéro que lorsque la phase secondaire FBX est elle-même repassée par zéro.

On a donc la séquence suivante :
AF ↗ , FX ↗ , C_{FBX} ↗ , AF ↘ , C_{FBX} ↘ , FX ↘ .

Le circuit 53 a la même structure pour délivrer les signaux FN et C_{FBN} à partir du signal BF pour une séquence similaire :
BF ↗ , FN ↗ , C_{FBN} ↗ , BF ↘ , C_{FBN} ↘, FN ↘ .

Le circuit 6 de génération des phases secondaires est commandé par les commandes de commutation C_{FBX} et C_{FBN}. Il comprend principalement un circuit 60 de génération d'une tension régulée Pₒᵤₜ vers deux circuits 61 et 62 à translateurs de niveau et deux circuits Mult_{b1} et Mult_{b2} pour respectivement délivrer les phases secondaires FBX et FBN.

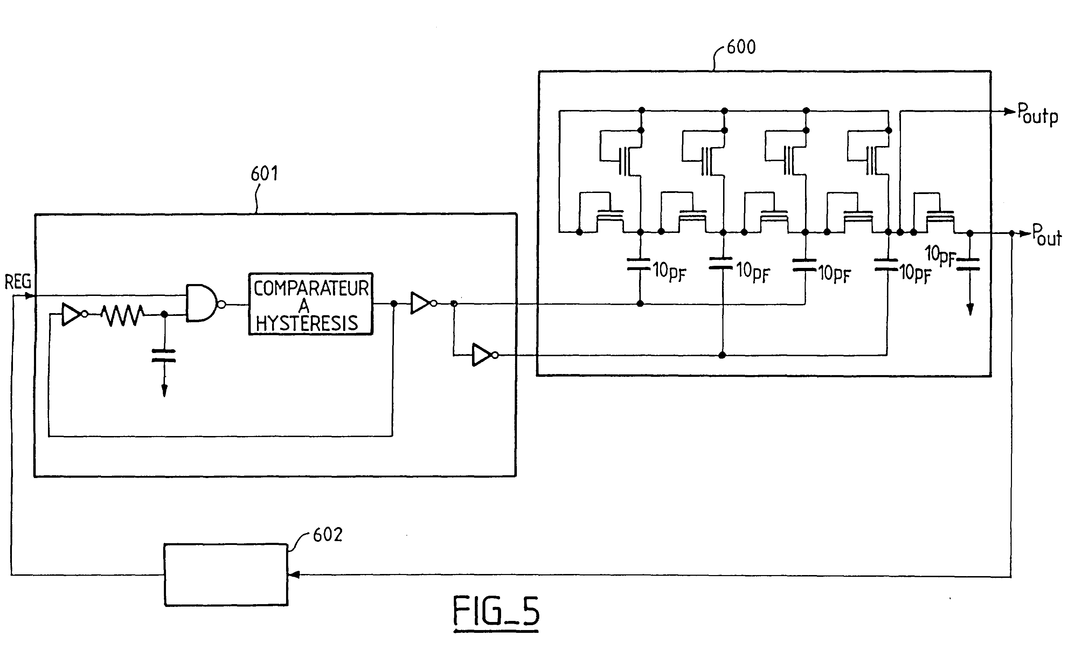

Un schéma-bloc du circuit 60 de génération de la tension régulée Pₒᵤₜ est représenté sur la figure 5. Il comprend une pompe 600 de charge classique de type Schenkel bien connu, avec des diodes et condensateurs. Les deux phases PH et PHB complémentaires appliquées aux condensateurs sont délivrées par un oscillateur en anneau 601 et la régulation de la fréquence de l'oscillateur par rapport à la tension de sortie de la pompe est obtenue par un régulateur 602. Ces circuits sont tous bien connus et ne seront pas détaillés. La pompe 600 délivre en sortie une tension régulée Pₒᵤₜ sur la source d'un transistor natif monté en diode. On peut aussi utiliser la tension de drain de ce transistor comme autre sortie Pₒᵤₜₚ qui a l'avantage d'être supérieure d'une tension de seuil à la tension Pₒᵤₜ.

Le circuit 61 reçoit donc en entrée la commande C_{FBX} et est alimenté par la tension régulée Pₒᵤₜ (figure 4).

Il délivre en sortie un premier signal CPX à créneaux avec une amplitude de l'ordre de 2.Pₒᵤₜ et un deuxième signal CBX à créneaux avec une amplitude de l'ordre de Pₒᵤₜ.

De même, le circuit 62 reçoit donc en entrée la commande C_{FBN} et est alimenté par la tension régulée Pₒᵤₜ (figure 4).

Il délivre en sortie un premier signal CPN à créneaux avec une amplitude de l'ordre de 2.Pₒᵤₜ et un deuxième signal CBN à créneaux avec une amplitude de l'ordre de Pₒᵤₜ.

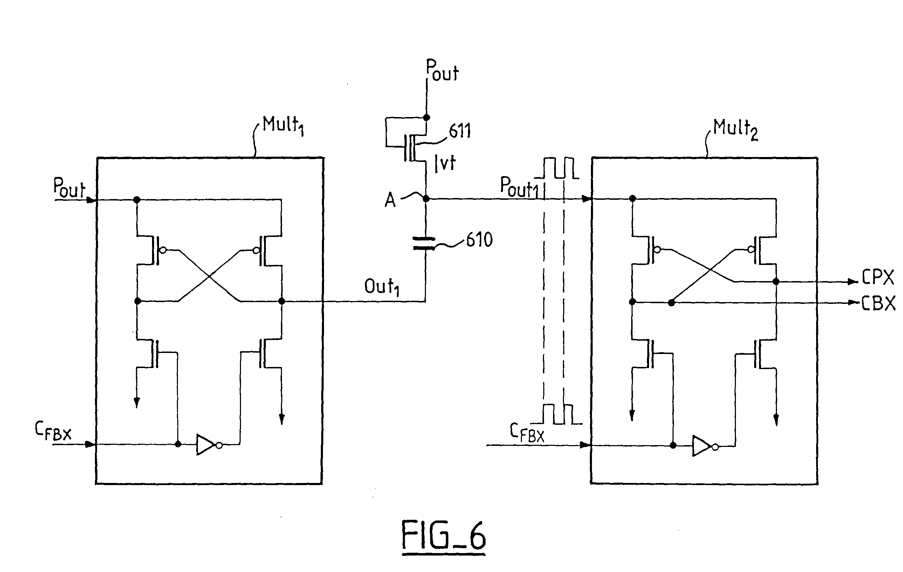

Ces circuits 61 et 62 ont une même structure. Cette structure et son fonctionnement sont détaillés en relation avec la figure 6 pour le circuit 61. On appliquera par analogie cette description au circuit 62.

Le circuit 61 comprend un premier translateur de niveau Mult₁ de structure classique avec deux branches de deux transistors, ici un transistor P et un transistor N, en série entre la tension régulée Pₒᵤₜ délivrée par le circuit 60 et la masse. La commande C_{FBX} permet de commuter sur le noeud de sortie d'une branche ou l'autre la tension Pₒᵤₜ ou la masse, selon son niveau Vdd ou zéro volt. Dans l'exemple, on utilise la sortie Out₁ qui commute entre zéro volt et Pₒᵤₜ en phase avec le signal de commande C_{FBX} (Out₁=0 quand C_{FBX}=0 et Out₁=Pₒᵤₜ quand C_{FBX}=Vdd), à la fréquence du signal d'horloge de base VIN. (Le transistor P qui commute le niveau Pₒᵤₜ est très conducteur : il n'y a pas de perte due à la tension de seuil).

La sortie Out₁ est connectée à un condensateur 610 suivi d'un transistor 611 monté en diode, qui forment un doubleur de tension. Dans l'exemple, le transistor 611 est un transistor N natif. Sa grille et son drain sont reliés ensemble à la tension régulée Pₒᵤₜ. On récupère alors sur la borne A du condensateur connectée au transistor 611, un signal en créneaux régulé Pₒᵤₜ₁, commutant entre 2Pₒᵤₜ-Vt et Pₒᵤt-Vt.

En effet, quand la sortie Out₁ est à son niveau bas, le condensateur se charge au niveau Pₒᵤₜ-Vt transmis sur le noeud A par le transistor natif 611. Quand la sortie Out₁ est à son niveau haut Pₒᵤₜ, le condensateur se décharge et le noeud A passe à 2Pₒᵤₜ-Vt.

Ce signal Pₒᵤₜ₁ en phase avec la commande C_{FBX} est appliqué pour alimenter un deuxième translateur Mult₂ qui reçoit en entrée la même commande de commutation C_{FBX}, pour commuter en phase avec le premier translateur. Ce translateur de structure identique au premier, délivre deux signaux à créneaux de tension, l'un en phase avec C_{FBX} et commutant entre 0 et 2Pₒᵤₜ-Vt, l'autre en opposition de phase avec C_{FBX} et commutant entre zéro volt et Pₒᵤₜ-Vt.

On notera que si on applique le signal régulé Pₒᵤₜₚ fourni par le circuit 60, on gagne un Vt d'amplitude.

Les deux signaux en sortie du deuxième translateur sont notés respectivement CPX et CBX. Ils sont appliqués au circuit Mult_{b1} de l'invention pour générer la phase secondaire FBX.

De même, le circuit 62 génère deux signaux à créneaux de tension, l'un en phase avec la commande C_{FBN} et commutant entre zéro volt et 2Pₒᵤₜ-Vt, l'autre en opposition de phase avec la commande C_{FBN} et commutant entre zéro volt et Pₒᵤₜ-Vt. Ces deux signaux notés CPN et CBN sont appliqués au circuit Mult_{b2} pour générer la phase secondaire FBN.

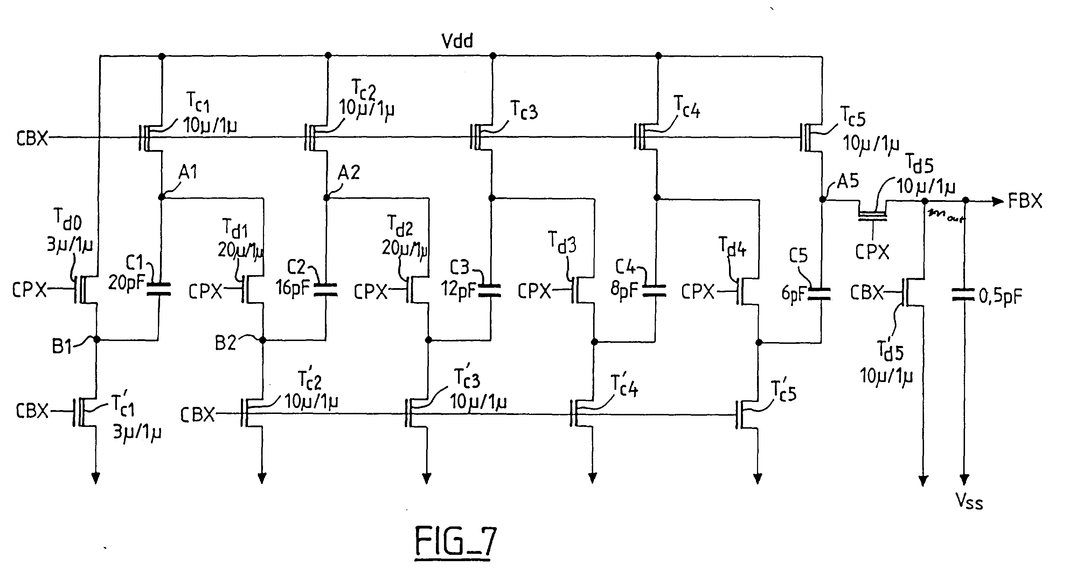

Les deux circuits de l'invention pour la génération des signaux FBX et FBN ont la même structure. La description suivante faite en référence à la figure 7 pour le circuit Mult_{b1} s'applique aussi bien au circuit Mult_{b2}.

Le circuit Mult_{b1} a pour but de multiplier la tension d'alimentation Vdd qui lui est appliquée, pour délivrer un signal FBX à créneaux d'amplitude supérieure à la tension d'alimentation Vdd, à partir de deux signaux de commande à créneaux en opposition de phase, l'amplitude de l'un des signaux étant supérieure à la tension d'alimentation. Dans l'exemple, ces signaux à créneaux sont ceux CBX et CPX délivrés par les circuits 60 et 61 précédemment décrits. Ils pourraient être obtenus d'une autre manière, selon l'application considérée. Ils doivent satisfaire deux caractéristiques : être en opposition de phase et l'un doit avoir une amplitude supérieure à la tension à fournir en sortie, comme on va le voir dans la suite.

Le circuit Mult_{b1} a une structure à réseau de condensateurs et transistors de commutation, à deux phases de fonctionnement, une première pour isoler tous les condensateurs et les charger au niveau de la tension d'alimentation tous simultanément, et une deuxième phase pour connecter tous ces condensateurs en série entre la tension d'alimentation et un noeud de sortie du réseau pour faire monter instantanément ce noeud de sortie à un niveau de tension supérieur au niveau de tension Vdd. Les condensateurs sont connectés tous en série par des transistors placés entre eux et commandés par un signal à créneaux de tension supérieure à la tension à commuter sur un noeud de sortie du réseau.

L'autre signal à créneaux CBX est appliqué aux grilles de transistors de commutation pour appliquer le niveau de tension d'alimentation Vdd sur chacun des condensateurs simultanément. Une amplitude de l'ordre de la tension d'alimentation est donc suffisante pour ce signal (Vdd+Vt).
Dans l'exemple la première phase de fonctionnement correspond donc à CPX=0 et CBX=Pₒᵤₜ (en faisant abstraction de Vt) pour charger les condensateurs. La deuxième phase de fonctionnement correspond à CPX=2Pₒᵤₜ et CBX=0, pour les mettre en série entre la tension d'alimentation et le noeud de sortie mₒᵤₜ du réseau, pour monter instantanément ce noeud de sortie de zéro volt à un niveau supérieur à la tension d'alimentation Vdd, mais inférieur au niveau haut de CPX, car le transistor ne peut commuter qu'une tension de drain au plus égale à sa tension de grille : la structure permet d'obtenir une amplitude de sortie limitée.

L'amplitude du signal CPX doit donc être au moins égale au niveau de tension souhaité sur la sortie mₒᵤₜ, et qui dépend de la valeur de Vdd et du nombre d'étages du générateur. Mais elle doit aussi être bien inférieure à la tension de claquage d'oxyde de grille des transistors (environ 20 volts).

Si de plus, comme dans l'exemple, le signal CPX est obtenu à partir d'une tension régulée, la structure du générateur Mult_{b1} fournit un signal d'amplitude régulée.

Si on détaille la structure à cinq étages représentée sur la figure 7, on a donc pour chaque condensateur du réseau, par exemple pour le condensateur C1 :
- un premier transistor de commutation T_{c1} connecté entre la tension Vdd et une première borne A1 du condensateur C1 et un deuxième transistor de commutation T_{c1}' connecté entre une deuxième borne B1 du condensateur C1 et la tension Vss, ces deux transistors étant commandés sur leur grille par le signal CBX et
- un troisième transistor de commutation T_{d1} connecté entre la première borne A1 dudit condensateur C1 et la deuxième borne B2 du condensateur suivant C2, et qui est commandé sur sa grille par le signal CPX.

Le noeud de sortie mₒᵤₜ est fourni par le troisième transistor T_{d5} associé au dernier condensateur C5 du réseau.

Un transistor de commutation T_{d5}' commandé par le signal CBX est en outre prévu entre le noeud de sortie mₒᵤₜ et la tension Vss, pour isoler le noeud de sortie et le tirer au niveau Vss pendant la charge des condensateurs. Un autre transistor de commutation T_{d0} est aussi prévu, commandé par le signal CPX, pour connecter la deuxième borne B1 du premier condensateur à la tension Vdd, pour mettre la chaîne des condensateurs en série entre la tension d'alimentation Vdd et le noeud de sortie mₒᵤₜ.

Le circuit Mult_{b1} sera en pratique réalisé avec des transistors de type N.

De préférence, les premier et deuxième transistors de commutation du réseau seront des transistors N natifs qui ont une tension de seuil (0,5 volt) plus faible que les transistors N enrichis, pour commuter avec le moins de perte possible le niveau Vdd sur les condensateurs.

Pour la même raison, on choisira un transistor N natif comme troisième transistor de commutation en série entre la première borne du dernier condensateur C5 et le noeud de sortie mₒᵤₜ, pour commuter sans pertes la haute tension ainsi produite. Ce transistor assure aussi comme on l'a vu une fonction de régulation de la tension commutée par l'amplitude du signal CPX qui commande sa grille.

Cette structure très simple permet d'obtenir immédiatement en sortie mₒᵤₜ un signal FBX en phase avec le signal de commande CPX, d'amplitude supérieure à la tension d'alimentation, et capable de charger des éléments capacitifs, tels les condensateurs de bootstrap de la pompe de charge 3, ce qui n'est pas le cas du signal CPX. Ce signal FBX est de plus régulé par le signal de commande CPX lui-même. Un tel dispositif est donc particulièrement avantageux dans une application telle que décrite dans la présente demande, pour fournir les phases secondaires de la pompe de charge 3.

Par son temps de réaction immédiat et sa sortance élevée (les condensateurs isolés et mis en parallèle sont tout de suite chargés à Vdd et les condensateurs mis en série font tout de suite monter le niveau en sortie), ce dispositif permet de travailler à haute fréquence et de commander des charges capacitives.

Dans une technologie CMOS, on a pu ainsi descendre la tension d'alimentation Vdd à moins de 1 volt (0.9 volt) et fournir une amplitude en sortie mₒᵤₜ de l'ordre de 4 volts, avec 5 étages dans le multiplieur selon l'invention et pour fournir les signaux FBX, FBN à une pompe de charges 3 avec une trentaine d'étages, en travaillant à 2 MHz.

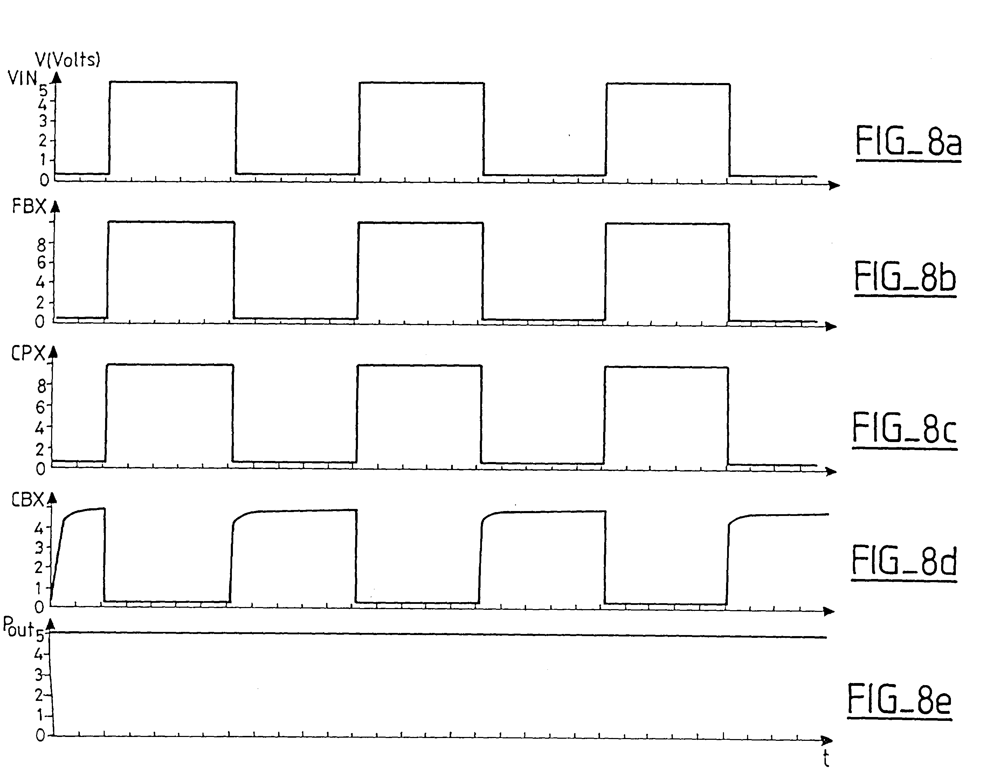

A la même fréquence, on a pu obtenir avec une tension d'alimentation Vdd de 5 volts, une amplitude en sortie mₒᵤₜ de 9,7 volts. Les figures 8a à 8e montrent la forme des différents signaux obtenus (/VIN, FBX, CPX, CPN et Pₒᵤₜ).

## Revendications

1. Dispositif de génération de créneaux de tension d'amplitude supérieure à la tension d'alimentation Vdd, comprenant un réseau de condensateurs, avec un circuit de commande à transistors de commutation à deux phases de fonctionnement, une première commandée par un premier signal de commutation (CBX) pour isoler tous les condensateurs et les charger au niveau de la tension d'alimentation tous simultanément, et une deuxième phase commandée par un deuxième signal de commutation (CPX) pour connecter tous ces condensateurs en série entre la tension d'alimentation (Vdd) et un noeud de sortie (mₒᵤₜ) du réseau pour faire monter instantanément ce noeud de sortie à un niveau de tension supérieur au niveau de la tension d'alimentation (Vdd), caractérisé en ce que ledit dispositif comprend en outre un circuit à translateurs de niveau alimenté par un générateur de tension régulée (Pₒᵤₜ), pour fournir les deux signaux de commutation en opposition de phase, le premier signal de commutation (CBX) commutant entre 0 volt et un niveau de l'ordre de la tension d'alimentation et le deuxième signal de commutation (CPX) commutant entre 0 volt et un niveau supérieur à la tension à commuter sur le noeud de sortie du réseau.

2. Dispositif de génération selon la revendication 1, le circuit de commande comprenant pour chaque condensateur (C1) du réseau :
- un premier transistor de commutation (Tc1) connecté entre la tension (Vdd) et une première borne (171) du condensateur (C1) et un deuxième transistor de commutation (Tc1') connecté entre une deuxième borne (B1) du condensateur (C1) et la tension 0 Volt (Vss), ces deux transistors étant commandés sur leur grille par le premier signal (CBX) et
- un troisième transistor de commutation (Tdl) connecté entre la première borne (A1) dudit condensateur (C1) et la deuxième borne (B2) du condensateur suivant (C2), et qui est commandé sur sa grille par le deuxième signal (CPX),
la tension commutée sur le noeud de sortie du réseau (mout) étant fournie par le troisième transistor de commutation (Td5) en série avec la première borne (A5) du dernier condensateur (C5), les transistors étant de type N et les premier et deuxième transistors de commutation étant natifs.

3. Dispositif de génération selon la revendication 2, caractérisé en ce que le troisième transistor (Td5) associé au dernier condensateur (C5) du réseau est natif de type N, et régule et limite la tension commutée par l'amplitude du deuxième signal de commutation (CPX) appliqué sur sa grille.

4. Dispositif de génération selon la revendication 2 ou 3, caractérisé en ce qu'un quatrième transistor (Td5') commandé par le deuxième signal (CBX) est prévu entre le noeud de sortie (mout) et la tension Vss, pour isoler le noeud de sortie et le tirer au niveau Vss pendant la charge des condensateurs.

5. Dispositif de génération selon l'une des revendications 2 à 4, caractérisé en ce qu'il comprend un autre transistor de commutation (Td0) commandé par le deuxième signal de commande (CPX) pour connecter la deuxième borne (B1) du premier condensateur (C1) à la tension d'alimentation (Vdd) quand les condensateurs sont mis en série.

6. Dispositif de génération selon l'une quelconque des revendications précédentes, caractérisé en ce que la tension régulée (Pout) est délivrée par une pompe de charge de type Schenkel.

7. Dispositif de génération selon l'une quelconque des revendications précédentes, caractérisé en ce que le circuit à translateurs de niveau comprend un premier translateur de niveau (mult1) alimenté par la tension régulée (Pout) dont une sortie (Out1) fournissant un signal à créneaux de tension commutant entre zéro volt et le niveau de la tension régulée (Pout), est appliqué à un doubleur de tension (610, 611) pour générer une tension (Pout1) appliquée à un deuxième translateur de niveau (mult2) délivrant en sortie le premier signal de commutation (CBX) et le deuxième signal de commutation (CPX).

8. Générateur de haute tension du type à pompe de charge comprenant un jeu de condensateurs et de transistors de commutation commandés par deu signaux d'horloge non recouvrants commutant entre le niveau 0 Volt (Vss) et le niveau de la tension d'alimentation (Vdd) et deux autres signaux d'horloge commutant sensiblement en synchronisme avec ces deux premiers signaux d'horloge, mais entre un niveau 0 Volt (Vss) et un niveau (VF) supérieur au niveau de la tension d'alimentation (Vdd), caractérisé en ce que ces deux autres signaux d'horloge sont respectivement délivrés par un dispositif de génération de créneaux de tension selon l'une quelconque des revendications précédentes.

9. Circuit intégré comprenant un générateur de tension selon la revendication 8.

10. Carte à microcircuits comprenant un circuit intégré selon la revendication 9.

## Patentansprüche

1. Spannungspulsgenerator mit einer Amplitude, die größer als die Versorgungsspannung Vdd ist, mit einem Netz aus Kondensatoren, mit einem Steuerschaltkreis aus Schalttransistoren mit zwei Funktionsphasen, einer ersten, gesteuert durch ein erstes Schaltsignal (CBX) zum Isolieren aller Kondensatoren und zum Aufladen aller dieser auf das Niveau der Versorgungsspannung gleichzeitig, und einer zweiten Phase, gesteuert durch ein zweites Schaltsignal (CPX) zum Verbinden aller dieser Kondensatoren in Reihe zwischen die Versorgungsspannung (Vdd) und einen Ausgangsknoten (mₒᵤₜ) des Netzes, um unmittelbar den Ausgangsknoten auf ein Spannungsniveau über das Versorgungsspannungsniveau (Vdd) steigen zu lassen,
dadurch gekennzeichnet, daß
die Vorrichtung außerdem einen Pegelwandlerschaltkreis umfaßt, der durch einen geregelten Spannungsgenerator (Pₒᵤₜ) versorgt wird, um die zwei Schaltsignale mit entgegengesetzter Phase auszugeben, wobei das erste Schaltsignal (CBX) zwischen 0 V und einem Pegel in der Ordnung der Versorgungsspannung wechselt, und das zweite Schaltsignal (CPX) zwischen 0 V und einem Pegel oberhalb der am Ausgangsknoten des Netzes zu schaltenden Spannung wechselt.

2. Generatorvorrichtung nach Anspruch 1, wobei der Steuerschaltkreis für jeden Kondensator (C1) des Netzes umfaßt:
- einen ersten Schalttransistor (Tc1) zwischen der Spannung (Vdd) und einem ersten Anschluß (A1) des Kondensators (C1) und einen zweiten Schalttransistor (Tc1') zwischen einem zweiten Anschluß (B1) des Kondensators (C1) und der Spannung 0 V (Vss), wobei die zwei Transistoren über ihr Gate durch das erste Signal (CBX) gesteuert werden und
- einen dritten Schalttransistor (Td1) zwischen dem ersten Anschluß (A1) des Kondensators (C1) und dem zweiten Anschluß (B2)des folgenden Kondensators (C2), und der über sein Gate durch das zweite Signal (CPX) gesteuert wird,
wobei die geschaltete Spannung an dem Ausgangsknoten des Netzes (mₒᵤₜ) ausgegeben wird durch den dritten Schalttransistor (Td5) in Reihe mit dem ersten Anschluß (A5) des ersten Kondensators (C5), wobei die Transistoren vom N-Typ sind und der erste und zweite Schalttransistor ursprüngliche Transistoren sind.

3. Generatorvorrichtung nach Anspruch 2, dadurch gekennzeichnet, daß der dritte Transistor (Td5), der zu dem letzten Kondensator (C5) des Netzes gehört, ein ursprünglicher vom N-Typ ist und die durch die Amplitude des zweiten Schaltsignals (CPX), das an seinem Gate anliegt, geschaltete Spannung regelt und begrenzt.

4. Generatorvorrichtung nach Anspruch 2 oder 3, dadurch gekennzeichnet, daß ein vierter Transistor (Td5'), gesteuert durch das zweite Signal (CBX), zwischen dem Ausgangsknoten (Mₒᵤₜ) und der Spannung Vss vorgesehen ist, um den Ausgangsknoten zu isolieren und ihn auf den Pegel Vss während des Aufladens der Kondensatoren zu ziehen.

5. Generatorvorrichtung nach einem der Ansprüche 2 bis 4, dadurch gekennzeichnet, daß er einen weiteren Schalttransistor (Td0) umfaßt, der durch das zweite Steuersignal (CPX) gesteuert wird, um den zweiten Anschluß (B1) des ersten Kondensators (C1) auf die Versorgungsspannung (Vdd) zu schalten, wenn die Kondensatoren in Reihe geschaltet werden.

6. Generatorvorrichtung nach einem der vorangehenden Ansprüche, dadurch gekennzeichnet, daß die geregelte Spannung (Pₒᵤₜ) durch eine Ladungspumpe vom Typ Schenkel ausgegeben wird.

7. Generatorvorrichtung nach einem der vorangehenden Ansprüche, dadurch gekennzeichnet, daß der Pegelwandlerschaltkreis einen ersten Pegelwandler (mult1) umfaßt, der durch die geregelte Spannung (Pₒᵤₜ) versorgt wird, dessen einer Ausgang (Out1) ein Spannungspulssignal ausgibt, das zwischen 0 V und dem Pegel der geregelten Spannung (Pₒᵤₜ) wechselt und das an einen Spannungsverdoppler (610, 611) angelegt wird, um eine Spannung (Pₒᵤₜ₁) zu erzeugen, die an einen zweiten Pegelwandler (mult2) angelegt wird, der am Ausgang das erste Schaltsignal (CBX) und das zweite Schaltsignal (CPX) ausgibt.

8. Hochspannungsgenerator vom Typ Ladungsmpumpe mit einem Satz von Kondensatoren und Schalttransistoren, die durch zwei Taktsignale gesteuert werden, die nicht überlappen und zwischen dem Pegel 0 V (Vss) und dem Pegel der Versorgungsspannung (Vdd) wechseln, und zwei weiteren Taktsignalen, die im wesentlichen synchron mit diesen zwei ersten Taktsignalen schalten, aber zwischen einem Pegel 0 V (Vss) und einem Pegel (VF), der größer als der Pegel der Versorgungsspannung (Vdd) ist, dadurch gekennzeichnet, daß die zwei anderen Taktsignale jeweils durch eine Spannungspulsgeneratorvorrichtung gemäß einem der vorangehenden Ansprüche ausgegeben werden.

9. Integrierter Schaltkreis mit einem Spannungsgenerator nach Anspruch 8.

10. Karte mit Mikroschaltkreisen mit einem integrierten Schaltkreis nach Anspruch 9.

## Claims

1. Device for generating voltage pulses with an amplitude greater than the supply voltage Vdd, comprising an array of capacitors, with a control circuit with switching transistors with two operating phases, a first controlled by a first switching signal (GBX) for isolating all the capacitors and charging them at the supply voltage all simultaneously, and a second phase controlled by a second switching signal (CPX) for connecting all these capacitors in series between the supply voltage (Vdd) and an output node (mₒᵤₜ) of the array in order to cause this output node to rise instantaneously to a voltage level higher than the supply voltage level (Vdd), characterised in that the said device also comprises a circuit with level translators fed by a regulated voltage generator (Pₒᵤₜ), in order to supply the two switching signals in phase opposition, the first switching signal (CBX) switching between 0 volts and a level of around the supply voltage and the second switching signal (CPX) switching between 0 volts and a level greater than the voltage to be switched on the output node of the array.

2. Generating device according to Claim 1, the control circuit comprising, for each capacitor (C1) in the array:
- a first switching transistor (Tc1) connected between the voltage (Vdd) and a first terminal (A1) of the capacitor (C1) and a second switching transistor (Tc1') connected between a second terminal (B1) of the capacitor (C1) and the voltage 0 volts (Vss), these two transistors being controlled at their gate by the first signal (CBX), and
- a third switching transistor (Td1) connected between the first terminal (A1) of the said capacitor (C1) and the second terminal (B2) of the following capacitor (B2), and which is controlled at its gate by the second signal (CPX),
- the voltage switched onto the output node of the array (mout) being supplied by the third switching transistor (Td5) in series with the first terminal (A5) of the last capacitor (C5), the transistors being n type and the first and second switching transistors being native.

3. Generating device according to Claim 2, characterised in that the third transistor (Td5) associated with the last capacitor (C5) in the array is native and n type, and regulates and limits the voltage switched by means of the amplitude of the second switching signal (CPX) applied to its gate.

4. Generating device according to Claim 2 or 3, characterised in that a fourth transistor (Td5') controlled by the second signal (CBX) is provided between the output node (mout) and the voltage Vss, in order to isolate the output node and draw it to the level Vss during the charging of the capacitors.

5. Generating device according to one of Claims 2 to 4, characterised in that it comprises another switching transistor (Td0) controlled by the second control signal (CPX) in order to connect the second terminal (B1) of the first capacitor (C1) to the supply voltage (Vdd) when the capacitors are put in series.

6. Generating device according to any one of the preceding claims, characterised in that the regulated voltage (Pout) is delivered by a Schenkel-type charge pump.

7. Generating device according to any one of the preceding claims, characterised in that the circuit with level translators comprises a first level translator (mult1) supplied by the regulated voltage (Pout), an output of which (out1), supplying a voltage pulse signal switching between zero volts and the regulated voltage level (Pout), is applied to a voltage doubler (610, 611) in order to generate a voltage (Pout1) applied to a second level translator (mult2) delivering at an output the first switching signal (CBX) and the second switching signal (CPX).

8. High-voltage generator of the charge pump type comprising a set of capacitors and switching transistors controlled by two non-overlapping clock signals switching between the level 0 volts (Vss) and the supply voltage level (Vdd) and two other clock signals switching substantially in synchronism with these first two clock signals, but between a level 0 volts (Vss) and a level (VF) higher than the level of the supply voltage (Vdd), characterised in that these other two clock signals are respectively delivered by a voltage pulse generating device according to any one of the preceding claims.

9. Integrated circuit comprising a voltage generator according to Claim 8.

10. Microcircuit card comprising an integrated circuit according to Claim 9.
